# FASCICULE DE BREVET EUROPEEN

(11) **EP 1 751 448 B1**
(45) Date de publication et mention de la délivrance du brevet: **06.02.2008**
(21) Numéro de dépôt: 05772965.9
(22) Date de dépôt: 20.05.2005
(51) Int. Cl.: F16H 3/66

(54) **TRANSMISSION AUTOMATIQUE MULTIVITESSES POUR VOITURES PARTICULIERES OU VEHICULES UTILITAIRES**
MEHRSTUFIGES AUTOMATIKGETRIEBE FÜR PERSONENKRAFTFAHRZEUGE ODER NUTZFAHRZEUGE
MULTI-SPEED AUTOMATIC TRANSMISSION FOR PRIVATE CARS OR COMMERCIAL VEHICLES

(30) Priorité: 21.05.2004 FR 0405536
(43) Date de publication de la demande: 14.02.2007
(73) Titulaire: SC BREVETS LEPELLETIER, F-78400 Chatou (FR)
(72) Inventeur: LEPELLETIER, Pierre, F-78400 Chatou (FR)
(74) Mandataire: Lewitter, Herbert
(86) Numéro de dépôt international: PCT/FR2005/001271
(87) Numéro de publication internationale: WO 2005/124190

(56) Documents cités:
- EP-A- 0 434 525
- EP-A- 1 390 642
- US-A1- 2003 186 775

## Description

La présente invention se situe dans le domaine des transmissions automatiques, notamment pour véhicules automobiles, constituées de trains planétaires contrôlée par des éléments de friction tels que des embrayages et des freins, et couramment associées à un organe de démarrage autorisant un glissement, tel qu'un convertisseur de couple généralement muni d'un embrayage de pontage, ou parfois un simple embrayage.

L'histoire récente de ces transmissions montre une tendance marquée à l'augmentation du nombre des vitesses, assez généralement six. Le brevet EP 0434525 B1, qui correspond au préambule de la revendication 1 a décrit une telle transmission comportant, entre un arbre d'entrée et un arbre de sortie disposés dans un carter, un train planétaire à quatre éléments repérés d'un premier à un quatrième par ordre de vitesse, dit train planétaire double, concentrique à l'arbre de sorte, et au moins un chemin de puissance entre l'arbre d'entrée et le train planétaire double, et cinq organes de contrôle, à savoir trois embrayages et deux freins dont le serrage sélectif deux à deux détermine divers rapports de transmission entre l'arbre d'entrée et l'arbre de sortie, un premier chemin de puissance présentant un premier rapport de vitesse fixe et comportant un premier et un deuxième embrayages, et un deuxième chemin de puissance présentant un deuxième rapport de vitesse fixe supérieur au premier rapport et de même sens et comportant un troisième embrayage. Le premier élément du train planétaire double est relié au premier chemin de puissance par le premier embrayage. Le deuxième élément est solidaire de l'arbre de sortie. Le troisième élément est relié au deuxième chemin de puissance par le troisième embrayage et immobilisé par le premier frein. Le quatrième élément est relié au premier chemin de puissance par le deuxième embrayage et immobilisé par le deuxième frein. On obtient par serrage sélectif deux à deux des cinq organes de contrôle, six vitesses en marche avant, à savoir une première, par le premier embrayage et le premier frein, une deuxième, par le premier embrayage et le deuxième frein, une troisième, par les premier et deuxième embrayages, une quatrième, par les premier et troisième embrayages, une cinquième, par les deuxième et troisième embrayages, une sixième, par le troisième embrayage et le deuxième frein, un point mort freiné, par les premier et deuxième freins, et une marche arrière, par le deuxième embrayage et le premier frein.

Cette transmission a été largement adoptée par des constructeurs de véhicules automobiles.

Il a été proposé de modifier la transmission à six vitesses de EP 0434525 pour faire une transmission à sept vitesses, où davantage, (voir Prof.-Dr. Peter Tenberge, in Der E-Automat, Ein Automatikgetriebe mit Esprit, Décembre 2001). Cette transmission à sept vitesses, voire davantage, présente de sérieux inconvénients, et notamment en ce qui concerne l'étagement des rapports.

Selon un premier aspect de l'invention, il est proposé une transmission automatique à huit vitesses comportant un minimum de composants avec, entre autres, un bon étagement des rapports.

A cet effet, selon ce premier aspect de l'invention, il est plus particulièrement proposé une transmission automatique multivitesses, notamment pour véhicule automobile, comportant entre un arbre d'entrée et un arbre de sortie disposés dans un carter, un train planétaire à quatre éléments repérés d'un premier à un quatrième par ordre de vitesse, dit train planétaire double, concentrique à l'arbre de sortie, deux chemins de puissance entre l'arbre d'entrée et le train planétaire double et cinq organes de contrôle, à savoir trois embrayages et deux freins dont le serrage sélectif deux à deux détermine divers rapports de transmission entre l'arbre d'entrée et l'arbre de sortie, le premier chemin de puissance présentant un premier rapport de vitesse fixe et comportant le premier et le deuxième embrayages et le deuxième chemin de puissance présentant un deuxième rapport de vitesse fixe supérieur au premier rapport et de même sens, et comportant le troisième embrayage, le premier élément du train planétaire double étant relié au premier chemin de puissance par le premier embrayage, le deuxième élément étant solidaire de l'arbre de sortie, le troisième élément étant relié au deuxième chemin de puissance par le troisième embrayage et immobilisé par le premier frein, et le quatrième élément étant relié au premier chemin de puissance par le deuxième embrayage et immobilisé par le deuxième frein, transmission caractérisée en ce qu'elle comporte un quatrième embrayage reliant le quatrième élément au deuxième chemin de puissance et constituant un sixième organe de contrôle, en sorte d'obtenir par serrage sélectif deux à deux des six organes de contrôle, huit vitesses en marche avant : une première, par le premier embrayage et le premier frein ; une deuxième par le premier embrayage et le deuxième frein ; une troisième, par les premier et deuxième embrayages ; une quatrième par les premier et quatrième embrayages ; une cinquième par les premier et troisième embrayages ; une sixième en prise directe par les troisième et quatrième embrayages ; une septième par les deuxième et troisième embrayages ; une huitième par le troisième embrayage et le deuxième frein ; un point mort freiné par les premier et deuxième freins ; une première marche arrière par le deuxième embrayage et le premier frein ; et une deuxième marche arrière par le quatrième embrayage et le premier frein .

Avantageusement dans une transmission selon ce premier aspect de l'invention, suivant que les arbres d'entrée et de sortie sont alignés ou parallèles, les rapports de vitesse fixes des deux chemins de puissance sont réalisés par un train planétaire à trois éléments ayant un élément solidaire du carter et par une prise directe, ou par deux trains d'engrenages parallèles à pignons toujours en prise.

Avantageusement, les arbres d'entrée et de sortie étant alignés, le premier chemin de puissance comporte un train planétaire à trois éléments dont l'un est solidaire du carter, définissant le premier rapport de vitesse fixe inférieur à l'unité, tandis que le deuxième chemin de puissance est une prise directe définissant le deuxième rapport de vitesse fixe égal à l'unité.

Avantageusement encore, le train planétaire à trois éléments comporte un porte-satellites solidaire de l'arbre d'entrée portant des satellites engrenant entre eux et respectivement avec une couronne et avec un planétaire solidaire du carter, la couronne formant le premier chemin de puissance de rapport fixe inférieur à l'unité comportant le premier embrayage et le deuxième embrayage et l'arbre d'entrée et le porte-satellites formant le deuxième chemin de puissance en prise directe de rapport fixe égal à l'unité comportant le troisième embrayage et le quatrième embrayage.

Selon une forme de réalisation avantageuse, le train planétaire double comprend un train planétaire à trois éléments ayant un porte-satellites portant des satellites engrenant avec un planétaire et avec une couronne et des satellites supplémentaires engrenant avec les satellites et avec un planétaire supplémentaire, le premier élément étant constitué du plantétaire supplémentaire, le deuxième élément étant constitué de la couronne, le troisième élément étant constitué du porte-satellites, et le quatrième élément étant constitué du planétaire .

Selon une autre forme de réalisation avantageuse, le train planétaire double comprend un train planétaire à trois éléments ayant un porte-satellites portant des satellites engrenant avec un planétaire et avec une couronne, et un autre train à trois éléments ayant un porte-satellites portant des satellites engrenant entre eux et respectivement avec une couronne et un planétaire, le premier élément étant constitué du planétaire, le deuxième élément étant constitué des couronnes solidaires en rotation, le troisième élément étant constitué des porte-satellites solidaires en rotation, et le quatrième élément étant constitué du planétaire.

Selon une forme d'exécution avantageuse, le train planétaire à trois éléments comporte un porte-satellites solidaire de l'arbre d'entrée portant des satellites engrenant entre eux et respectivement avec une couronne et avec un planétaire relié à un frein en vue du contrôle du premier chemin de puissance, la couronne formant ce premier chemin de puissance de rapport fixe inférieur à l'unité comportant le premier embrayage et le deuxième embrayage, et l'arbre d'entrée et le porte-satellites formant le deuxième chemin de puissance en prise directe de rapport fixe égal à l'unité comportant le troisième embrayage et le quatrième embrayage.

Selon une autre forme de réalisation avantageuse, les arbres d'entrée et de sortie étant parallèles, d'une part le premier chemin de puissance et le deuxième chemin de puissance comportent chacun un train d'engrenages parallèles, à pignons toujours en prise, définissant respectivement le premier rapport de vitesse fixe et le deuxième rapport de vitesse fixe supérieur au premier et de même sens, d'autre part le train planétaire double comprend un train planétaire à trois éléments ayant un porte-satellites portant des satellites engrenant avec un planétaire et avec une couronne et un autre train à trois éléments ayant un porte-satellites portant des satellites engrenant avec un planétaire et avec une couronne, le premier élément étant constitué de la couronne, le deuxième élément étant constitué de la couronne et du porte-satellites solidaires en rotation, le troisième élément étant constitué du porte-satellites et le quatrième élément étant constitué des planétaires solidaires en rotation.

Selon un autre aspect de l'invention, l'architecture de la transmission multivitesses est adaptée pour faire une nouvelle transmission à six vitesses avant et une marche arrière en éliminant le deuxième embrayage de la transmission à huit vitesses avant et deux marches arrière.

Selon cet aspect de l'invention, il est prévu une transmission automatique multivitesses qui comporte entre un arbre d'entrée et un arbre de sortie disposés dans un carter, un train planétaire à quatre éléments repérés d'un premier à un quatrième par ordre de vitesse, dit train planétaire double, concentrique à l'arbre de sortie, deux chemins de puissance entre l'arbre d'entrée et le train planétaire double et cinq organes de contrôle, à savoir trois embrayages et deux freins dont le serrage sélectif deux à deux détermine divers rapports de transmission entre l'arbre d'entrée et l'arbre de sortie, le premier chemin de puissance présentant un premier rapport de vitesse fixe et comportant le premier embrayage et le deuxième chemin de puissance présentant un deuxième rapport de vitesse fixe supérieur au premier rapport et de même sens et comportant le deuxième embrayage, le premier élément du train planétaire double étant relié au premier chemin de puissance par le premier embrayage, le deuxième élément étant solidaire de l'arbre de sortie, le troisième élément étant relié au deuxième chemin de puissance par le deuxième embrayage et immobilisé par le premier frein et le quatrième élément étant immobilisé par le deuxième frein, transmission caractérisée en ce que le quatrième élément est relié au deuxième chemin de puissance par le troisième embrayage en sorte d'obtenir par serrage sélectif deux à deux des cinq organes de contrôle, six vitesses en marche avant : une première, par le premier embrayage et le premier frein ; une deuxième par le premier embrayage et le deuxième frein; une troisième par les premier et troisième embrayages; une quatrième par les premier et deuxième embrayages une cinquième en prise directe par les deuxième et troisième embrayages; une sixième par le deuxième embrayage et le deuxième frein et une marche arrière par le troisième embrayage et le premier frein.

Selon une forme de réalisation avantageuse de cet aspect de l'invention, les arbres d'entrée et de sortie étant alignés, le premier chemin de puissance comporte un train planétaire à trois éléments dont l'un est solidaire du carter, définissant le premier rapport de vitesse fixe inférieur à l'unité, tandis que le deuxième chemin de puissance est une prise directe définissant le deuxième rapport de vitesse fixe égal à l'unité.

De même, selon cette forme de réalisation de cet aspect de l'invention, le train planétaire à trois éléments peut comporter un porte-satellites solidaire de l'arbre d'entrée portant des satellites engrenant entre eux et respectivement avec une couronne et avec un planétaire solidaire du carter, la couronne formant le premier chemin de puissance de rapport fixe inférieur à l'unité comportant le premier embrayage et l'arbre d'entrée et le porte-satellites formant le deuxième chemin de puissance en prise directe de rapport fixe égal à l'unité comportant le deuxième embrayage et le troisième embrayage.

Selon une autre forme de réalisation de cet aspect de l'invention, le train planétaire double comprend un train planétaire à trois éléments ayant un porte-satellites portant des satellites engrenant avec un planétaire et avec une couronne et des satellites supplémentaires engrenant avec les satellites et avec un planétaire supplémentaire, le premier élément étant constitué du planétaire supplémentaire, le deuxième élément étant constitué de la couronne, le troisième élément étant constitué du porte-satellites et le quatrième élément étant constitué du planétaire.

Selon une autre forme d'exécution de cet autre aspect de l'invention, le train planétaire double comprend un train planétaire à trois éléments ayant un porte-satellites portant des satellites engrenant avec un planétaire et avec une couronne et un autre train à trois éléments ayant un porte-satellites portant des satellites engrenant entre eux et respectivement avec une couronne et un planétaire, le premier élément étant constitué du planétaire, le deuxième élément étant constitué des couronnes solidaires en rotation, le troisième élément étant constitué des porte-satellites solidaires en rotation, et le quatrième élément étant constitué du planétaire.

Selon encore une forme de réalisation de cet aspect de l'invention, les arbres d'entrée et de sortie étant parallèles, d'une part le premier chemin de puissance et le deuxième chemin de puissance comportent chacun un train d'engrenages parallèles, à pignons toujours en prise, définissant respectivement le premier rapport de vitesse fixe et le deuxième rapport de vitesse fixe supérieur au premier et de même sens, d'autre part le train planétaire double comprend un train planétaire à trois éléments ayant un porte-satellites portant des satellites engrenant avec un planétaire et avec une couronne et un autre train à trois éléments ayant un porte-satellites portant des satellites engrenant avec un planétaire et avec une couronne, le premier élément étant constitué de la couronne, le deuxième élément étant constitué de la couronne et du porte-satellites solidaires en rotation, le troisième élément étant constitué du porte-satellites et le quatrième élément étant constitué des planétaires solidaires en rotation.

Les caractéristiques et avantages de l'invention ressortiront d'ailleurs de la description qui va suivre à titre d'exemple, en référence aux dessins annexés dans lesquels :
- la figure 1 représente schématiquement une transmission à huit vitesses avant et deux marches arrière d'une première forme de réalisation selon un premier aspect de l'invention, avec les arbres d'entrée et de sortie alignés et un premier type de train double, montée derrière un convertisseur hydraulique de couple ;
- la figure 2 représente la grille de sélection des éléments de friction de la transmission à huit vitesses avant et deux vitesses arrière selon le premier aspect de l'invention ;
- la figure 3 représente une variante de la transmission de la figure 1, avec adjonction d'une roue libre facilitant les passages de vitesse de première en deuxième et de deuxième en première ;
- la figure 4 représente une autre variante de la transmission de la figure 1, avec un deuxième type de deuxième train double ;
- la figure 4A représente une variante simplifiée de la forme de réalisation de la transmission de la figure 4 où les couronnes de chacun des trains du train double sont égales et les satellites adjacents égaux et montés sur un même axe commun aux deux porte-satellites ;
- la figure 5 représente encore une variante de la transmission de la figure 1, avec un frein tenant lieu d'embrayage de démarrage au lieu du convertisseur de couple ;
- la figure 6 représente schématiquement une transmission à six vitesses avant et une seule marche arrière d'une première forme de réalisation selon un second aspect de l'invention ;
- la figure 7 représente schématiquement une seconde forme de réalisation de la transmission à huit vitesses avant et deux marches arrière où les arbres d'entrée et de sortie sont parallèles, avec un troisième type de train double ;
- la figure 8 représente une seconde forme de réalisation de la transmission à six vitesses avant et une seule marche arrière ; et
- la figure 9 représente la grille de sélection des éléments de friction de la transmission à six vitesses avant et une marche arrière selon le second aspect de l'invention.

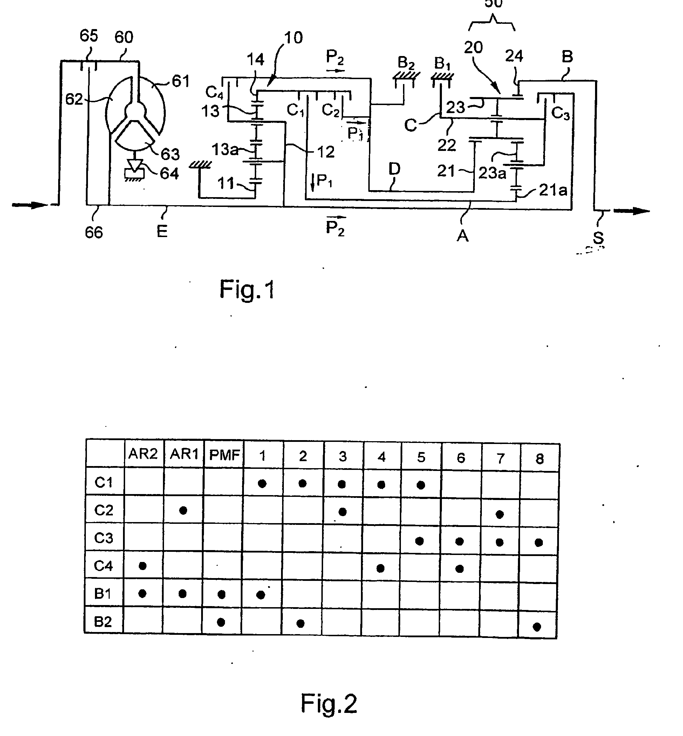

Dans la première forme de réalisation de la figure 1, une transmission à huit vitesses avant et deux marches arrière d'une première forme de réalisation selon un premier aspect de l'invention comporte, dans un carter, un arbre d'entrée E et un arbre de sortie S alignés. D'une manière connue en soi, la transmission est représentée munie d'un convertisseur hydraulique de couple 60 comprenant un impulseur 61, une turbine 62, un réacteur 63, une roue libre 64, un embrayage de pontage 65, et un arbre de sortie 66 constituant l'arbre d'entrée E.

Cette transmission présente un train planétaire 10 à trois éléments comprenant un porte-satellites 12 solidaire de l'arbre d'entrée E portant des satellites 13 et 13a engrenant entre eux et respectivement avec une couronne 14 entraînant un premier embrayage C1 et un deuxième embrayage C2, et avec un planétaire 11 solidaire du carter, définissant un premier chemin de puissance P1 présentant un premier rapport de vitesse fixe ou rapport de réduction G1 inférieur à l'unité.

L'arbre d'entrée E et le porte-satellites 12 entraînent respectivement un troisième embrayage C3 et un quatrième embrayage C4 et définissent un deuxième chemin de puissance P2 en prise directe, le deuxième rapport de vitesse fixe G2 étant égal à l'unité.

Dans cette première forme de réalisation, la transmission présente un train planétaire double 50 du type Ravigneaux à quatre éléments référencés A, B, C, D dans l'ordre de leurs vitesses respectives comprenant un train planétaire à trois éléments 20 ayant un porte-satellites 22 portant des satellites 23 engrenant avec un planétaire 21 et avec une couronne 24, et des satellites supplémentaires 23a engrenant avec les satellites 23 et avec un planétaire supplémentaire 21 a.

Ainsi, le premier élément A est constitué du planétaire supplémentaire 21 a, le deuxième élément B est constitué de la couronne 24, le troisième élément C est constitué du porte-satellites 22, et le quatrième élément D est constitué du planétaire 21. Le premier élément A est associé au premier embrayage C1, le deuxième élément B est solidaire de l'arbre de sortie S, le troisième élément C est associé au troisième embrayage C3 et à un premier frein B1, et le quatrième élément D est associé au deuxième embrayage C2, au quatrième embrayage C4 et à un deuxième frein B2.

Le fonctionnement est le suivant :
En première, le premier embrayage C1 et le premier frein B1 sont serrés. Le premier élément A est entraîné selon le rapport de réduction G 1 du train 10 et le troisième élément C est immobilisé. La transmission s'effectue selon ce rapport G1 et le rapport de réduction inférieur du train planétaire double 50.
En deuxième le premier embrayage C1 et le deuxième frein B2 sont serrés. Le premier élément A est entraîné selon le rapport G1 et le quatrième élément D est immobilisé. La transmission s'effectue selon le rapport G1 et le rapport de réduction intermédiaire du train planétaire double 50.
En troisième, les premier et deuxième embrayages C1 et C2 sont serrés. Les premier et quatrième éléments A et D et le train planétaire double 50 sont entraînés en bloc selon le rapport G1. La transmission s'effectue selon ce rapport.
En quatrième, les premier et quatrième embrayages C1 et C4 sont serrés. Le premier élément A est entraîné selon le rapport G1 et le quatrième élément D est entraîné en prise directe. La transmission s'effectue selon un premier rapport intermédiaire entre G1 et la prise directe.
En cinquième, les premier et troisième embrayages C1 et C3 sont serrés. Le premier élément A est entraîné selon le rapport G1 et le troisième élément C est entraîné en prise directe. La transmission s'effectue selon un deuxième rapport intermédiaire entre G1 et la prise directe.
En sixième, les troisième et quatrième embrayages C3 et C4 sont serrés. Les troisième et quatrième éléments C et D et le train planétaire double 50 sont entraînés en bloc en prise directe. La transmission s'effectue en prise directe.
En septième, les deuxième et troisième embrayages C2 et C3 sont serrés. Le troisième élément C est entraîné en prise directe et le quatrième élément D est entraîné selon le rapport G1. La transmission s'effectue selon un rapport de surmultiplication partiel du train planétaire double 50.
En huitième, le troisième embrayage C3 et le deuxième frein B2 sont serrés. Le troisième élément C est entraîné en prise directe et le quatrième élément D est immobilisé. La transmission s'effectue selon le rapport de surmultiplication entier du train planétaire double 50.

Au point mort freiné, les premier et deuxième freins B1 et B2 sont serrés. Les troisième et quatrième éléments C et D et le train planétaire double 50 sont immobilisés en bloc. L'arbre de sortie S est immobilisé tandis que l'arbre d'entrée est libre. Aucune transmission n'est effectuée.

En première arrière, le deuxième embrayage C2 et le premier frein B1 sont serrés. Le quatrième élément D est entraîné selon le rapport G1 et le troisième élément C est immobilisé. La transmission s'effectue selon ce rapport G1 et le rapport de marche arrière du train planétaire double 50.

En deuxième arrière, le quatrième embrayage C4 et le premier frein B1 sont serrés. Le quatrième élément D est entraîné en prise directe et le troisième élément C est immobilisé. La transmission s'effectue selon le rapport de marche arrière du train planétaire double 50.

La figure 2 représente la grille de sélection des éléments de friction correspondant à ces onze états de fonctionnement. On remarquera que ces onze états correspondent en fait aux quinze combinaisons deux à deux des quatre embrayages et des deux freins, moins quatre combinaisons interdites pour lesquelles l'arbre d'entrée E est immobilisé et l'arbre de sortie S est libre, soit celles du troisième embrayage C3 avec le premier frein B1, du deuxième embrayage C2 avec le deuxième frein B2, du deuxième embrayage C2 avec le quatrième embrayage C4 et du quatrième embrayage C4 avec le deuxième frein B2. On remarquera également que le passage de chaque état au suivant, ou de deux en deux, ou plus, s'effectue d'un bout à l'autre en changeant un seul des deux éléments de friction mis en oeuvre, soit exclusivement par des transitions simples se prêtant parfaitement à toute forme de contrôle.

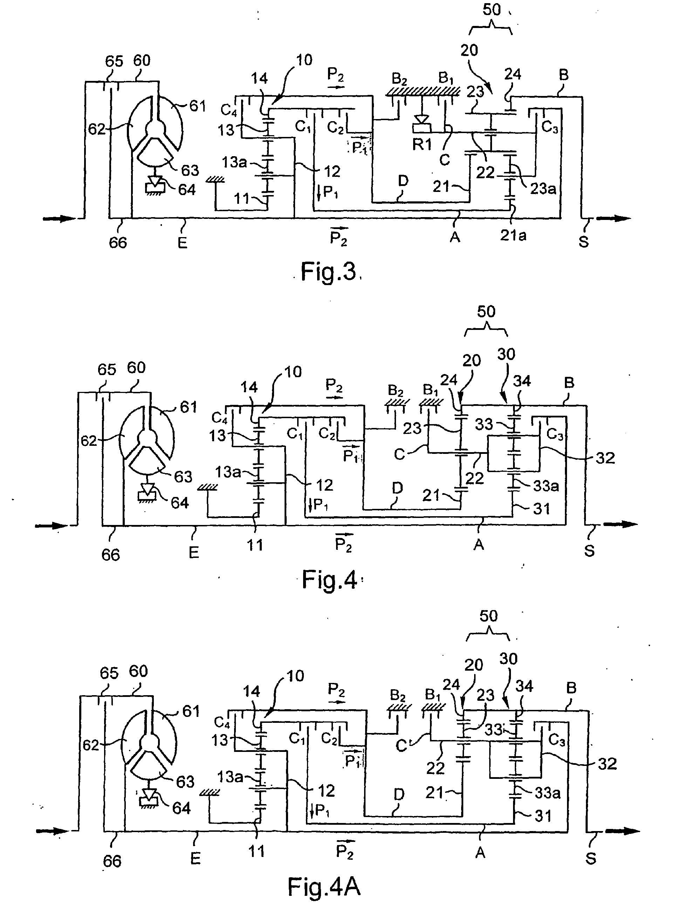

On se reportera maintenant aux figures 3, 4, 5, qui représentent trois variantes respectives de la transmission à huit vitesses avant et deux marches arrière de la figure 1. Tous les éléments communs avec la figure 1 ou remplissant les mêmes fonctions portent les mêmes références.

Dans la variante de la figure 3, une roue libre R1 est ajoutée en parallèle avec le premier frein B1 pour faciliter d'une manière connue en soi les passages de vitesse de première en deuxième et de deuxième en première. Cette roue libre n'intervient en rien dans le fonctionnement qui reste identique à celui de la figure 1.

Dans la variante de la figure 4, le train planétaire double 50 est du type Simpson et comprend le train à trois éléments 20 de la figure 1 et un autre train à trois éléments 30 ayant un porte-satellites 32 portant des satellites 33 et 33a engrenant entre eux et respectivement avec une couronne 34 et un planétaire 31. Le premier élément A est constitué du planétaire 31 du train 30, le deuxième élément B est constitué des couronnes 24 et 34 des trains 20 et 30 solidaires en rotation, le troisième élément C est constitué des porte-satellites 22 et 32 des trains 20 et 30 solidaires en rotation, et le quatrième élément D est constitué du planétaire 21 du train 20.

Dans la forme d'exécution de la figure 4A, comme dans la variante de la figure 4, le train planétaire double 50 est du type Simpson et comprend le train à trois éléments 20 de la figure 1 et un autre train à trois éléments 30 ayant un porte-satellites 32 portant des satellites 33 et 33a engrenant entre eux et respectivement avec une couronne 34 et un planétaire 31. Le premier élément A est constitué du planétaire 31 du train 30, le deuxième élément B est constitué des couronnes 24 et 34 des trains 20 et 30 solidaires en rotation, le troisième élément C est constitué des porte-satellites 22 et 32 des trains 20 et 30 solidaires en rotation, et le quatrième élément D est constitué du planétaire 21 du train 20. A la différence de la variante de la figure 4, les couronnes 24 et 34 sont égales et les satellites adjacents 23 et 33 égaux et montés sur un même axe commun aux deux porte-satellites 22 et 32, apportant ainsi une simplification d'ensemble.

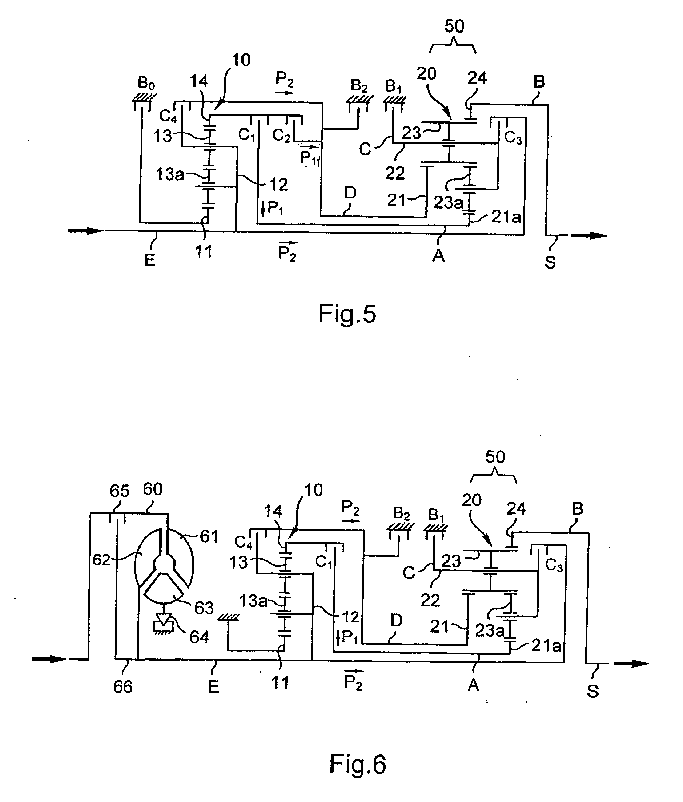

Dans la troisième variante de la figure 5, le convertisseur de couple 60 est supprimé, et la liaison permanente au carter du planétaire 11 du train 10 est remplacée par une liaison non permanente au moyen d'un frein B₀ utilisé comme embrayage de démarrage.

Selon cette troisième variante, le fonctionnement est le suivant :
A l'arrêt, le frein B₀ est desserré. Le premier chemin de puissance P1 est interrompu et toutes les vitesses qui l'empruntent soit la première, la deuxième, la troisième, la quatrième, la cinquième, la septième et la première marche arrière sont débrayées. Le démarrage est possible sur toutes ces vitesses en serrant progressivement le frein B₀ exactement comme un embrayage de démarrage classique, à la seule condition de le dimensionner et d'assurer son refroidissement en conséquence. Bien entendu on se limite pratiquement aux démarrages en première et première marche arrière, et éventuellement deuxième et deuxième marche arrière.
En marche, le frein B₀ est serré sur toutes les vitesses avant comme arrière, et le fonctionnement reste identique à celui de la figure 1.

Les exemples 1, 2, 3 ci-dessous montrent l'excellent étagement des rapports et la remarquable flexibilité en ouverture de ces transmissions à huit vitesses avant et deux marches arrière, selon le premier aspect de l'invention.

### Exemple 1 : Figures 1 à 5

| Train planétaire 10 | | Train double 50 (Ravigneaux 20 ou Simpson 20,30) | | | |
|---|---|---|---|---|---|
| Couronne 14 | 88 dents | Couronnes 24, 34 | | 88 dents | |
| Satellites 13 | 17 dents | Satellites 23, 33 | | 25 dents | |
| Satellites 13a | 15 dents | Satellites 23a, 33a | | 23 dents | |
| Planétaire 11 | 46 dents | Planétaire 21 | | 38 dents | |
| Rapport G1 | 0,477 | Planétaires 21a, 31 | | 31 dents | |

| | | Vitesses | Couples | | Raisons |
|---|---|---|---|---|---|
| 2^{eme} AR | | 0,432 | 2,316 | | 2,095 |
| 1^{ere} AR | | 0,206 | 4,852 | | 1,226 |
| 1^{ere} | | 0,168 | 5,948 | | 1,826 |
| 2^{eme} | | 0,307 | 3,257 | | 1,554 |
| 3^{eme} | | 0,477 | 2,095 | | 1,391 |
| 4^{ème} | | 0,664 | 1,507 | | 1,229 |
| 5^{eme} | | 0,816 | 1,226 | | 1,226 |
| 6^{eme} (prise directe) | | 1,000 | 1,000 | | 1,226 |
| 7^{eme} | | 1,226 | 0,816 | | 1,168 |
| 8^{eme} | | 1,432 | 0,698 | | |
| | | Ouverture : 8,52 | | | |

### Exemple 2 - Figures 1 à 5

| Train planétaire 10 | | Train double 50 (Ravigneaux 20 ou Simpson 20,30) | | | |
|---|---|---|---|---|---|
| Couronne 14 | 87 dents | Couronnes 24, 34 | | 89 dents | |
| Satellites 13 | 17 dents | Satellites 23, 33 | | 26 dents | |
| Satellites 13a | 15 dents | Satellites 23a, 33a | | 25 dents | |
| Planétaire 11 | 42 dents | Planétaire 21 | | 37 dents | |
| Rapport G1 | 0,517 | Planétaires 21a, 31 | | 32 dents | |

| | | Vitesses | Couples | | Raisons |
|---|---|---|---|---|---|
| 2^{eme} AR | | 0,416 | 2,405 | | 1,933 |
| 1^{ere} AR | | 0,215 | 4,650 | | 1,156 |
| 1^{ere} | | 0,186 | 5,377 | | 1,826 |
| 2^{eme} | | 0,340 | 2,945 | | 1,523 |
| 3^{eme} | | 0,517 | 1,933 | | 1,321 |
| 4^{eme} | | 0,683 | 1,464 | | 1,210 |
| 5^{eme} | | 0,826 | 1,210 | | 1,210 |
| 6^{eme} (prise directe) | | 1,000 | 1,000 | | 1,201 |
| 7^{eme} | | 1,201 | 0,833 | | 1,179 |
| 8^{eme} | | 1,416 | 0,706 | | |
| | | Ouverture : 7,61 | | | |

### Exemple 3 : Figures 1 à 5

| Train planétaire 10 | | Train double 50 (Ravigneaux 20 ou Simpson 20,30) | | | |
|---|---|---|---|---|---|
| Couronne 14 | 87 dents | Couronnes 24, 34 | | 98 dents | |
| Satellites 13 | 17 dents | Satellites 23 | | 32 dents | |
| Satellites 13a | 15 dents | Satellites 33 | | 25 dents | |
| Planétaire 11 | 42 dents | Satellites 23a, 33a | | 23 dents | |
| Rapport G1 | 0,517 | Planétaire 21 | | 34 dents | |
| | | Planétaires 21a, 31 | | 38 dents | |

| | | Vitesses | Couples | | Raisons |
|---|---|---|---|---|---|
| 2^{eme} AR | | 0,347 | 2,882 | | 1,933 |
| 1^{ere}AR | | 0,179 | 5,573 | | 0,895 |
| 1^{ere} | | 0,201 | 4,986 | | 1,833 |
| 2^{eme} | | 0,368 | 2,720 | | 1,407 |
| 3^{eme} | | 0,517 | 1,933 | | 1,270 |
| 4^{eme} | | 0,657 | 1,522 | | 1,237 |
| 5^{eme} | | 0,813 | 1,230 | | 1,230 |
| 6^{eme} (prise directe) | | 1,000 | 1,000 | | 1,167 |
| 7^{eme} | | 1,167 | 0,857 | | 1,154 |
| 8^{eme} | | 1,347 | 0,742 | | |
| | | Ouverture : 6,72 | | | |

On se reportera maintenant à la figure 6 qui représente une transmission à six vitesses avant et une marche arrière selon une première forme de réalisation d'un deuxième aspect de l'invention. Cette transmission reprend l'architecture générale de la transmission de la figure 1, mais dans laquelle l'embrayage C2 et les vitesses qui en dépendent, soit la troisième, la septième et la première vitesse arrière sont supprimés, réduisant ainsi la transmission à six vitesses avant et une marche arrière.

Le fonctionnement de cette transmission à six vitesses avant et une marche arrière est le suivant : en première, le premier embrayage C1 et le premierfrein B1 sont serrés. Le premier élément A est entraîné selon le rapport de réduction G1 du train 10 et le troisième élément C est immobilisé. La transmission s'effectue selon ce rapport G1 et le rapport de réduction inférieur du train planétaire double 50.

En deuxième le premier embrayage C1 et le deuxième frein B2 sont serrés. Le premier élément A est entraîné selon le rapport G1 et le quatrième élément D est immobilisé. La transmission s'effectue selon le rapport G1 et le rapport de réduction intermédiaire du train planétaire double 50.

En troisième, les embrayages C1 et C4 (ici les premier et troisième) sont serrés. Le premier élément A est entraîné selon le rapport G1 et le quatrième élément D est entraîné en prise directe. La transmission s'effectue selon un premier rapport intermédiaire entre G1 et la prise directe.

En quatrième, les embrayages C1 et C3 (ici les premier et deuxième) sont serrés. Le premier élément A est entraîné selon le rapport G1 et le troisième élément C est entraîné en prise directe. La transmission s'effectue selon un deuxième rapport intermédiaire entre G1 et la prise directe.

En cinquième, les embrayages C3 et C4 (ici les deuxième et troisième) sont serrés. Les troisième et quatrième éléments C et D et le train planétaire double 50 sont entraînés en bloc en prise directe. La transmission s'effectue en prise directe.

En sixième, l'embrayage C3 et le deuxième frein B2 sont serrés. Le troisième élément C est entraîné en prise directe et le quatrième élément D est immobilisé. La transmission s'effectue selon le rapport de surmultiplication entier du train planétaire double 50.

Au point mort freiné, les premier et deuxième freins B1 et B2 sont serrés. Les troisième et quatrième éléments C et D et le train planétaire double 50 sont immobilisés en bloc. L'arbre de sortie S est immobilisé tandis que l'arbre d'entrée est libre. Aucune transmission n'est effectuée.

En marche arrière, l'embrayage C4 et le premier frein B1 sont serrés. Le quatrième élément D est entraîné en prise directe et le troisième élément C est immobilisé. La transmission s'effectue selon le rapport de marche arrière du train planétaire double 50.

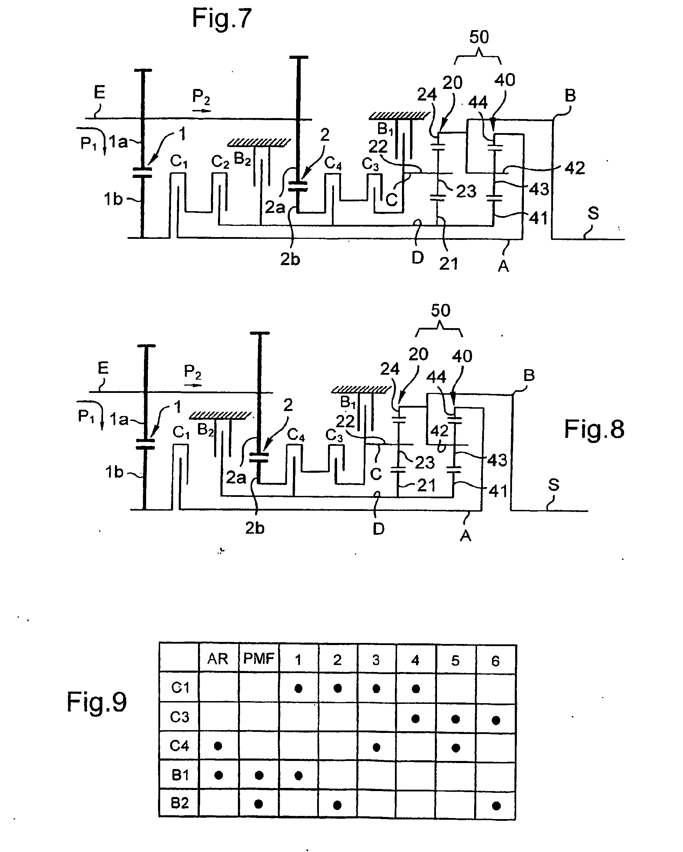

La grille de sélection des éléments de friction ainsi modifiés est représentée à la figure 9. Tous les éléments communs avec la figure 1 ou remplissant les mêmes fonctions gardent les mêmes références.

L'exemple 4 ci-dessous montre l'étagement toujours excellent des rapports et l'ouverture toujours bien adaptée de cette transmission à six vitesses avant et une marche arrière.

### Exemple 4 : Figure 6

| Train planétaire 10 | | Train double 50 (Ravigneaux 20 ou Simpson 20,30) | | | |
|---|---|---|---|---|---|
| Couronne 14 | 77 dents | Couronnes 24, 34 | | 86 dents | |
| Satellites 13 | 15 dents | Satellites 23 | | 32 dents | |
| Satellites 13a | 14 dents | Satellites 33 | | 21 dents | |
| Planétaire 11 | 41 dents | Satellites 23a, 33a | | 20 dents | |
| Rapport G1 | 0,468 | Planétaire 21 | | 22 dents | |
| | | Planétaires 21a, 31 | | 38 dents | |

| | | Vitesses | Couples | | Raisons |
|---|---|---|---|---|---|
| AR | | 0,256 | 3,909 | | 1,238 |
| 1^{ere} | | 0,207 | 4,841 | | 1,800 |
| 2^{eme} | | 0,372 | 2,689 | | 1,550 |
| 3ème | | 0,576 | 1,735 | | 1,326 |
| 4^{eme} | | 0,765 | 1,308 | | 1,308 |
| 5^{eme} (prise directe) | | 1,000 | 1,000 | | 1,256 |
| 6^{eme} | | 1,256 | 0,796 | | |
| | | Ouverture : 6,08 | | | |

Par ailleurs, les modifications illustrées et décrites ci-dessus en rapport avec les figures 3, 4 et 5 peuvent également être adoptées dans la transmission à six vitesses avant et une marche arrière de la figure 6.

On se reportera maintenant à la figure 7 qui représente schématiquement une deuxième forme de réalisation de la transmission à huit vitesses avant et deux marches arrière selon le premier aspect de l'invention où l'arbre d'entrée E et l'arbre de sortie S sont parallèles. Tous les éléments communs aux figures 1 et 7 ou remplissant les mêmes fonctions portent les mêmes références.

Cette transmission présente un premier train d'engrenages parallèles 1 à pignons toujours en prise comprenant un pignon 1a solidaire de l'arbre d'entrée E et un premier ensemble pignon 1b, premier embrayage C1, deuxième embrayage C2 monté concentriquement à l'arbre de sortie S, constituant le premier chemin de puissance P1 présentant le premier rapport de vitesse fixe G1.

Cette transmission présente également un deuxième train d'engrenages parallèles 2 à pignons toujours en prise comprenant un pignon 2a solidaire de l'arbre d'entrée E et un deuxième ensemble pignon 2b, troisième embrayage C3, quatrième embrayage C4, monté de même concentriquement à l'arbre de sortie S, constituant le deuxième chemin de puissance P2 présentant le deuxième rapport de vitesse fixe G2 supérieur à G1 et de même sens.

Dans cette transmission, le train planétaire double 50 comprend le train à trois éléments 20 de la figure 1 et un autre train à trois éléments 40 ayant un porte-satellites 42 portant des satellites 43 engrenant avec un planétaire 41 et avec une couronne 44. Le premier élément A est constitué de la couronne 44 du train 40, le deuxième élément B est constitué du porte-satellites 42 du train 40 et de la couronne 24 du train 20 solidaires en rotation, le troisième élément C est constitué du porte-satellites 22 du train 20, et le quatrième élément D est constitué des planétaires 21 et 41 des trains 20 et 40 solidaires en rotation.

Les quatre éléments A, B, C, D sont associés aux quatre embrayages C1, C2, C3, C4 et aux deux freins B1, B2 comme à la figure 1. La grille de sélection de la figure 2 s'applique sans modification et la description du fonctionnement est identique sous la seule réserve de la disparition de la prise directe remplacée par le rapport G2.

L'exemple 5 ci-dessous reprend l'exemple 1 de la première forme de réalisation de la transmission. A de très petits écarts près dus aux contraintes d'engrènement inévitables, l'ouverture et les raisons sont toutes conservées et les vitesses et les couples tous proportionnels à ceux de l'exemple 1 dans les rapports G2 et 1/G2, attestant l'identité de résultats de cette deuxième forme de réalisation de la transmission à huit vitesses avant et deux marches arrière, selon le deuxième aspect de l'invention.

### Exemple 5 : Figure 7

| Train parallèles 1, 2 | | Train double 50 (Simpson 20, 40) | | | |
|---|---|---|---|---|---|
| Pignon 1 a | 27 dents | Couronnes 24 | | 88 dents | |
| Pignon 1 b | 51 dents | Satellites 23 | | 25 dents | |
| Rapport G1 | 0,529 | Planétaire 21 | | 38 dents | |
| | | | | | |
| Pignon 2a | 41 dents | Couronne 44 | | 81 dents | |
| Pignon 2b | 37 dents | Satellites 43 | | 18 dents | |
| Rapport G2 | 1,108 | Planétaire 41 | | 45 dents | |

| | | Vitesses | Couples | | Raisons |
|---|---|---|---|---|---|
| 2^{eme} AR | | 0,479 | 2,090 | | 2,093 |
| 1^{ere} AR | | 0,229 | 4,374 | | 1,227 |
| 1^{ere} | | 0,186 | 5,368 | | 1,827 |
| 2^{eme} | | 0,340 | 2,938 | | 1,556 |
| 3^{eme} | | 0,529 | 1,889 | | 1,390 |
| 4^{eme} | | 0,736 | 1,359 | | 1,229 |
| 5^{eme} | | 0,905 | 1,106 | | 1,225 |
| 6^{eme} (prise directe) | | 1,108 | 0,902 | | 1,226 |
| 7^{eme} | | 1,358 | 0,736 | | 1,168 |
| 8^{eme} | | 1,587 | 0,630 | | |
| | | Ouverture : 8,52 | | | |

On se reportera maintenant à la figure 8 qui représente une seconde forme de réalisation de la transmission à six vitesses avant et une marche arrière, où, comme dans la figure 7, l'arbre d'entrée (E) et l'arbre de sortie (S) sont parallèles. Dans cette transmission, par rapport à celle illustrée à la figure 7, l'embrayage C2 et les vitesses qui en dépendent, soit la troisième, la septième et la première marche arrière sont supprimés. La grille de sélection des éléments de friction est celle de la figure 9. Tous les éléments communs avec la figure 7 ou remplissant les mêmes fonctions gardent les mêmes références.

L'exemple 6 ci-dessous reprend l'exemple 4 de la première forme de réalisation de la transmission à six vitesses avant et une marche arrière. A de très petits écarts près dus aux contraintes d'engrènements inévitables, l'ouverture et les raisons sont toutes conservées et les vitesses et les couples tous proportionnels à ceux de l'exemple 4 dans les rapports G2 et 1/G2, attestant l'identité de résultats de cette deuxième forme de réalisation.

### Exemple 6 : Figure 8

| Train parallèles 1, 2 | | Train double 50 (Simpson 20, 40) | | | |
|---|---|---|---|---|---|
| Pignon 1a | 28 dents | Couronnes 24 | | 86 dents | |
| Pignon 1b | 53 dents | Satellites 23 | | 32 dents | |
| Rapport G1 | 0,528 | Planétaire 21 | | 22 dents | |
| | | | | | |
| Pignon 2a | 43 dents | Couronne 44 | | 86 dents | |
| Pignon 2b | 38 dents | Satellites 43 | | 32 dents | |
| Rapport G2 | 1,132 | Planétaire 41 | | 22 dents | |

| | | Vitesses | Couples | | Raisons |
|---|---|---|---|---|---|
| AR | | 0,289 | 3,455 | | 1,236 |
| 1^{ere} | | 0,234 | 4,270 | | 1,796 |
| 2^{eme} | | 0,421 | 2,377 | | 1,548 |
| 3ème | | 0,651 | 1,536 | | 1,327 |
| 4^{eme} | | 0,864 | 1,157 | | 1,309 |
| 5^{ème} | | 1,132 | 0,884 | | 1,256 |
| 6^{eme} | | 1,421 | 0,704 | | |
| | | Ouverture : 6,07 | | | |

Bien entendu, l'invention n'est pas limitée aux formes de réalisation décrites et représentées uniquement à titre d'exemple, mais embrasse toutes variantes. En particulier, on ne sortira du cadre de l'invention définie par ses revendications, en proposant toute autre organisation spécifique concernant les deux chemins de puissance P1, P2, les deux rapports de vitesse différents G1, G2, et/ou le train planétaire double 50.

## Revendications

1. Transmission automatique multivitesses, notamment pour véhicule automobile, comportant entre un arbre d'entrée (E) et un arbre de sortie (S) disposés dans un carter, un train planétaire à quatre éléments repérés d'un premier à un quatrième (A, B, C, D) par ordre de vitesse, dit train planétaire double (50), concentrique à l'arbre de sortie (S), deux chemins de puissance (P1, P2) entre l'arbre d'entrée (E) et le train planétaire double (50) et cinq organes de contrôle, à savoir trois embrayages (C1, C2, C3) et deux freins (B1, B2) dont le serrage sélectif deux à deux détermine divers rapports de transmission entre l'arbre d'entrée (E) et l'arbre de sortie (S), le premier chemin de puissance (P1) présentant un premier rapport de vitesse fixe (G1) et comportant le premier et le deuxième embrayages (C1, C2) et le deuxième chemin de puissance (P2) présentant un deuxième rapport de vitesse fixe (G2) supérieur au premier rapport (G1) et de même sens et comportant le troisième embrayage (C3), le premier élément (A) du train planétaire double (50) étant relié au premier chemin de puissance (P1) par le premier embrayage (C1), le deuxième élément (B) étant solidaire de l'arbre de sortie (S), le troisième élément (C) étant relié au deuxième chemin de puissance (P2) par le troisième embrayage (C3) et immobilisé par le premier frein (B1), et le quatrième élément (D) étant relié au premier chemin de puissance (P1) par le deuxième embrayage (C2) et immobilisé par le deuxième frein (B2), transmission **caractérisée en ce qu'**elle comporte un quatrième embrayage (C4) reliant le quatrième élément (D) au deuxième chemin de puissance (P2) et constituant un sixième organe de contrôle, en sorte d'obtenir par serrage sélectif deux à deux des six organes de contrôle, huit vitesses en marche avant : une première, par le premier embrayage (C1) et le premier frein (B1) ; une deuxième par le premier embrayage (C1) et le deuxième frein (B2); une troisième, par les premier et deuxième embrayages (C1, C2) ; une quatrième par les premier et quatrième embrayages (C1, C4) ; une cinquième par les premier et troisième embrayages (C1, C3) ; une sixième en prise directe par les troisième et quatrième embrayages (C3, C4) ; une septième par les deuxième et troisième embrayages (C2, C3) ; une huitième par le troisième embrayage (C3) et le deuxième frein (B2) ; un point mort freiné par les premier et deuxième freins (B1, B2) ; une première vitesse arrière par le deuxième embrayage (C2) et le premier frein (B1) ; et une deuxième vitesse arrière par le quatrième embrayage (C4) et le premier frein (B1).

2. Transmission selon la revendication 1, **caractérisée en ce que** les arbres d'entrée (E) et de sortie (S) étant alignés, le premier chemin de puissance (P1) comporte un train planétaire (10) à trois éléments dont l'un est solidaire du carter, définissant le premier rapport de vitesse fixe (G1) inférieur à l'unité, tandis que le deuxième chemin de puissance (P2) est une prise directe définissant le deuxième rapport de vitesse fixe (G2) égal à l'unité.

3. Transmission selon la revendication 2, **caractérisée en ce que** le train planétaire (10) à trois éléments comporte un porte-satellites (12) solidaire de l'arbre d'entrée (E) portant des satellites (13) et (13a) engrenant entre eux et respectivement avec une couronne (14) et avec un planétaire (11) solidaire du carter, la couronne (14) formant le premier chemin de puissance de rapport fixe (G1) inférieur à l'unité comportant le premier embrayage (C1) et le deuxième embrayage (C2), et l'arbre d'entrée (E) et le porte-satellites (12) formant le deuxième chemin de puissance (P2) en prise directe de rapport fixe (G2) égal à l'unité comportant le troisième embrayage (C3) et le quatrième embrayage (C4)

4. Transmission selon les revendications 1 à 3, **caractérisée en ce que** le train planétaire double (50) comprend un train planétaire à trois éléments (20) ayant un porte-satellites (22) portant des satellites (23) engrenant avec un planétaire (21) et avec une couronne (24), et des satellites supplémentaires (23a) engrenant avec les satellites (23) et avec un planétaire supplémentaire (21 a), le premier élément (A) étant constitué du planétaire supplémentaire (21a), le deuxième élément (B) étant constitué de la couronne (24), le troisième élément (C) étant constitué du porte-satellites (22), et le quatrième élément (D) étant constitué du planétaire (21).

5. Transmission selon les revendications 1 à 3, **caractérisée en ce que** le train planétaire double (50) comprend un train planétaire à trois éléments (20) ayant un porte-satellites (22) portant des satellites (23) engrenant avec un planétaire (21) et avec une couronne (24), et un autre train à trois éléments (30) ayant un porte-satellites (32) portant des satellites (33) et (33a) engrenant entre eux et respectivement avec une couronne (34) et un planétaire (31), le premier élément (A) étant constitué du planétaire (31), le deuxième élément (B) étant constitué des couronnes (24) et (34) solidaires en rotation, le troisième élément (C) étant constitué des porte-satellites (22) et (32) solidaires en rotation, et le quatrième élément (D) étant constitué du planétaire (21).

6. Transmission selon l'une quelconque des revendications précédentes, **caractérisée en ce qu'**elle comporte en outre une roue libre (R1) disposée en parallèle avec le premier frein (B1).

7. Transmission selon l'une quelconque des revendications précédentes, **caractérisée en ce qu'**elle est munie d'un convertisseur hydraulique ayant un arbre de sortie (66) constituant l'arbre d'entrée (E).

8. Transmission selon la revendication 2, **caractérisée en ce que** le train planétaire (10) à trois éléments comporte un porte-satellites (12) solidaire de l'arbre d'entrée (E) portant des satellites (13) et (13a) engrenant entre eux et respectivement avec une couronne (14) et avec un planétaire (11) relié à un frein (Bo) en vue du contrôle du premier chemin de puissance (P1), la couronne (14) formant ce premier chemin de puissance (P1) de rapport fixe (G1) inférieur à l'unité comportant le premier embrayage (C1) et le deuxième embrayage (C2), et l'arbre d'entrée (E) et le porte-satellites (12) formant le deuxième chemin de puissance (P2) en prise directe de rapport fixe (G2) égal à l'unité comportant le troisième embrayage (C3) et le quatrième embrayage (C4).

9. Transmission selon la revendication 1, **caractérisée en ce que** les arbres d'entrée (E) et de sortie (S) étant parallèles, le premier chemin de puissance (P1) et le deuxième chemin de puissance (P2) comportent chacun un train d'engrenages parallèles (1), (2), à pignons toujours en prise, définissant respectivement le premier rapport de vitesse fixe (G1) et le deuxième rapport de vitesse fixe (G2) supérieur à (G1) et de même sens.

10. Transmission selon la revendication 9, **caractérisée en ce que** le train planétaire double (50) comprend un train planétaire à trois éléments (20) ayant un porte-satellites (22) portant des satellites (23) engrenant avec un planétaire (21) et avec une couronne (24) et un autre train à trois éléments (40) ayant un porte-satellites (42) portant des satellites (43) engrenant avec un planétaire (41) et avec une couronne (44), le premier élément (A) étant constitué de la couronne (44), le deuxième élément (B) étant constitué de la couronne (24) et du porte-satellites (42) solidaires en rotation, le troisième élément (C) étant constitué du porte-satellites (22) et le quatrième élément (D) étant constitué des planétaires (21) et (41) solidaires en rotation.

11. Transmission automatique multivitesses, notamment pour véhicule automobile, comportant entre un arbre d'entrée (E) et un arbre de sortie (S) disposés dans un carter, un train planétaire à quatre éléments repérés d'un premier à un quatrième (A, B, C, D) par ordre de vitesse, dit train planétaire double (50), concentrique à l'arbre de sortie (S), deux chemins de puissance (P1, P2) entre l'arbre d'entrée (E) et le train planétaire double (50) et cinq organes de contrôle, à savoir trois embrayages (C1, C3, C4) et deux freins (B1, B2) dont le serrage sélectif deux à deux détermine divers rapports de transmission entre l'arbre d'entrée (E) et l'arbre de sortie (S), le premier chemin de puissance (P1) présentant un premier rapport de vitesse fixe (G1) et comportant le premier embrayage (C1), et le deuxième chemin de puissance (P2) présentant un deuxième rapport de vitesse fixe (G2) supérieur au premier rapport (G1) et de même sens et comportant le deuxième embrayage (C3), le premier élément (A) du train planétaire double (50) étant relié au premier chemin de puissance (P1) par le premier embrayage (C1), le deuxième élément (B) étant solidaire de l'arbre de sortie (S), le troisième élément (C) étant relié au deuxième chemin de puissance (P2) par le deuxième embrayage (C3) et immobilisé par le premier frein (B1), et le quatrième élément (D) étant immobilisé par le deuxième frein (B2) et relié à un des deux chemins de puissance par le troisième embrayage (C4), en sorte d'obtenir par serrage sélectif deux à deux des cinq organes de contrôle six vitesses en marche avant : une première, par le premier embrayage (C1) et le premier frein (B1); une deuxième par le premier embrayage (C1) et le deuxième frein (B2); une troisième par les premier et troisième embrayages (C1, C4); une quatrième par les premier et deuxième embrayages (C1, C3); une cinquième en prise directe par les deuxième et troisième embrayages (C3, C4); une sixième par le deuxième embrayage (C3) et le deuxième frein (B2); un point mort freiné par les premier et deuxième freins (B1, B2); et une vitesse arrière par le troisième embrayage (C4) et le premier frein (B1), **caractérisée en ce que** le quatrième élément (D) est relié au deuxième chemin de puissance (P2) par le troisième embrayage (C4).

12. Transmission selon la revendication 11, **caractérisée en ce que** les arbres d'entrée (E) et de sortie (S) étant alignés, le premier chemin de puissance (P1) comporte un train planétaire (10) à trois éléments dont l'un est solidaire du carter, définissant le premier rapport de vitesse fixe (G1) inférieur à l'unité, tandis que le deuxième chemin de puissance (P2) est une prise directe définissant le deuxième rapport de vitesse fixe (G2) égal à l'unité.

13. Transmission selon la revendication 12, **caractérisée en ce que** le train planétaire (10) à trois éléments comporte un porte-satellites (12) solidaire de l'arbre d'entrée (E) portant des satellites (13) et (13a) engrenant entre eux et respectivement avec une couronne (14) et avec un planétaire (11) solidaire du carter, la couronne (14) formant le premier chemin de puissance de rapport fixe (G1) inférieur à l'unité comportant le premier embrayage (C1) et l'arbre d'entrée (E) et le porte-satellites (12) formant le deuxième chemin de puissance (P2) en prise directe de rapport fixe (G2) égal à l'unité comportant le deuxième embrayage (C3) et le troisième embrayage (C4)

14. Transmission selon les revendications 11 à 13, **caractérisée en ce que** le train planétaire double (50) comprend un train planétaire à trois éléments (20) ayant un porte-satellites (22) portant des satellites (23) engrenant avec un planétaire (21) et avec une couronne (24), et des satellites supplémentaires (23a) engrenant avec les satellites (23) et avec un planétaire supplémentaire (21 a), le premier élément (A) étant constitué du planétaire supplémentaire (21 a), le deuxième élément (B) étant constitué de la couronne (24), le troisième élément (C) étant constitué du porte-satellites (22), et le quatrième élément (D) étant constitué du planétaire (21).

15. Transmission selon les revendications 11 à 13, **caractérisée en ce que** le train planétaire double (50) comprend un train planétaire à trois éléments (20) ayant un porte-satellites (22) portant des satellites (23) engrenant avec un planétaire (21) et avec une couronne (24), et un autre train à trois éléments (30) ayant un porte-satellites (32) portant des satellites (33) et (33a) engrenant entre eux et respectivement avec une couronne (34) et un planétaire (31), le premier élément (A) étant constitué du planétaire (31), le deuxième élément (B) étant constitué des couronnes (24) et (34) solidaires en rotation, le troisième élément (C) étant constitué des porte-satellites (22) et (32) solidaires en rotation, et le quatrième élément (D) étant constitué du planétaire (21).

16. Transmission selon la revendication 11, **caractérisée en ce que** les arbres d'entrée (E) et de sortie (S) étant parallèles, le premier chemin de puissance (P1) et le deuxième chemin de puissance (P2) comportent chacun un train d'engrenages parallèles (1), (2), à pignons toujours en prise, définissant respectivement le premier rapport de vitesse fixe (G1) et le deuxième rapport de vitesse fixe (G2) supérieur à (G1) et de même sens.

17. Transmission selon la revendication 16, **caractérisée en ce que** le train planétaire double (50) comprend un train planétaire à trois éléments (20) ayant un porte-satellites (22) portant des satellites (23) engrenant avec un planétaire (21) et avec une couronne (24) et un autre train à trois éléments (40) ayant un porte-satellites (42) portant des satellites (43) engrenant avec un planétaire (41) et avec une couronne (44), le premier élément (A) étant constitué de la couronne (44), le deuxième élément (B) étant constitué de la couronne (24) et du porte-satellites (42) solidaires en rotation, le troisième élément (C) étant constitué du porte-satellites (22) et le quatrième élément (D) étant constitué des planétaires (21) et (41) solidaires en rotation.

## Claims

1. A multispeed automatic transmission, in particular for automobile vehicles, comprising between an input shaft (E) and an output shaft (S) housed in a casing, a so-called double planetary gearset (50), with four members (A, B, C, D) identified from first to fourth in order of speed, concentric with the output shaft (S), two power paths (P1, P2) between the input shaft (E) and the double planetary gearset (50) and five control devices, i.e. three clutches (C1, C2, C3) and two brakes (B1, B2) of which the selective operation in pairs determines various transmission ratios between the input shaft (E) and the output shaft (S), the first power path (P1) having a first fixed speed ratio (G1) and comprising the first and the second clutches (C1, C2) and the second power path (P2) having a second fixed speed ratio (G2) greater than the first ratio (G1) and in the same direction, and comprising the third clutch (C3), the first member (A) of the double planetary gearset (50) being connected to the first power path (P1) by the first clutch (C1), the second member (B) being fixed to the output shaft (S), the third member (C) being connected to the second power path (P2) by the third clutch (C3) and held against rotation by the first brake (B1), and the fourth member (D) being connected to the first power path (P1) by the second clutch (C2) and held against rotation by the second brake (B2), which transmission is **characterized in that** it comprises a fourth clutch (C4) connecting the fourth member (D) to the second power path (P2) and constituting a sixth control device, such that selective operation in pairs of the six control devices provides eight forward gears: a first, by the first clutch (C1) and the first brake (B1); a second by the first clutch (C1) and the second brake (B2) ; a third by the first and second clutches (C1, C2); a fourth by the first and fourth clutches (C1, C4); a fifth by the first and third clutches (C1, C3) ; a sixth in direct drive by the third and fourth clutches (C3, C4); a seventh by the second and third clutches (C2, C3); an eighth by the third clutch (C3) and the second brake (B2); a braked neutral position by the first and second brakes (B1, B2); a first reverse drive by the second clutch (C2) and the first brake (B1); and a second reverse drive by the fourth clutch (C4) and the first brake (B1).

2. A transmission according to claim 1, **characterized in that** the input (E) and output (S) shafts being aligned, the first power path (P1) comprises a planetary gearset (10) with three members of which one is fixed to the casing, defining the first fixed speed ratio (G1) less than one, whereas the second power path (P2) is in direct drive defining the second fixed speed ratio (G2) equal to one.

3. A transmission according to claim 2, **characterized in that** the three-member planetary gearset (10) comprises a planet carrier (12) fixed to the input shaft (E) carrying planet pinions (13) and (13a) meshed with each other and respectively with a ring gear (14) and with a sun gear (11) fixed to the casing, the ring gear (14) forming the first power path of fixed ratio (G1) less than one comprising the first control clutch (C1) and the second control clutch (C2), and the input shaft (E) and the planet carrier (12) forming the second power path (P2) in direct drive of fixed ratio (G2) equal to one comprising the third control clutch (C3) and the fourth control clutch (C4).

4. A transmission according to claims 1 to 3, **characterized in that** the double planetary gearset (50) comprises a three-member planetary gearset (20) having a planet carrier (22) carrying planet pinions (23) meshed with a sun gear (21) and with a ring gear (24), and additional planet pinions (23a) meshed with the planet pinions (23) and with an additional sun gear (21 a), the first member (A) being constituted by the additional sun gear (21 a), the second member (B) being constituted by the ring gear (24), the third member (C) being constituted by the planet carrier (22), and the fourth member (D) being constituted by the sun gear (21).

5. A transmission according to claims 1 to 3, **characterized in that** the double planetary gearset (50) comprises a three-member planetary gearset (20) having a planet carrier (22) carrying planet pinions (23) meshed with a sun gear (21) and with a ring gear (24), and another three-member gearset (30) having a planet carrier (32) carrying planet pinions (33) and (33a) meshed with each other and respectively with a ring gear (34) and a sun gear (31), the first member (A) being constituted by the sun gear (31), the second member (B) being constituted by the ring gears (24) and (34) fixed together for rotation, the third member (C) being constituted by the planet carriers (22) and (32) fixed together for rotation, and the fourth member (D) being constituted by the sun gear (21).

6. A transmission according to any one of the preceding claims, **characterized in that** it further comprises a freewheel device (R1) disposed in parallel with the first control brake (B1).

7. A transmission according to any one of the preceding claims, **characterized in that** it is provided with a hydraulic converter having an output shaft (66) constituting the input shaft (E).

8. A transmission according to claim 2, **characterized in that** the three-member planetary gearset (10) comprises a planet carrier (12) fixed to the input shaft (E) carrying planet pinions (13) and (13a) meshed with each other and respectively with a ring gear (14) and with a sun gear (11) connected to a control brake (Bₒ) for the control of the first power path (P1), the ring gear (14) forming that first power path (P1) of fixed ratio (G1) less than one comprising the first control clutch (C1) and the second control clutch (C2), and the input shaft (E) and the planet carrier (12) forming the second power path (P2) in direct drive of fixed ratio (G2) equal to one comprising the third control clutch (C3) and the fourth control clutch (C4).

9. A transmission according to claim 1, **characterized in that** the input (E) and output shafts (S) being parallel, the first power path (P1) and the second power path (P2) each comprise a parallel gearset (1), (2), with constant-mesh gearwheels, respectively defining the first fixed speed ratio (G1) and the second fixed speed ratio (G2) greater than the first ratio (G1) and in the same direction.

10. A transmission according to claim 9, **characterized in that** the double planetary gearset (50) comprises a three-member planetary gearset (20) having a planet carrier (22) carrying planet pinions (23) meshed with a sun gear (21) and with a ring gear (24) and another three-member gearset (40) having a planet carrier (42) carrying planet pinions (43) meshed with a sun gear (41) and with a ring gear (44), the first member (A) being constituted by the ring gear (44), the second member (B) being constituted by the ring gear (24) and the planet carrier (42) fixed together for rotation, the third member (C) being constituted by the planet carrier (22) and the fourth member (D) being constituted by sun gears (21) and (41) fixed together for rotation.

11. A multispeed automatic transmission, in particular for automobile vehicles, comprising between an input shaft (E) and an output shaft (S) housed in a casing, a so-called double planetary gearset (50), with four members identified from first to fourth (A, B, C, D) in order of speed, concentric with the output shaft (S), two power paths (P1, P2) between the input shaft (E) and the double planetary gearset (50) and five control devices, i.e. three clutches (C1, C3, C4) and two brakes (B1, B2) of which the selective operation in pairs determines various transmission ratios between the input shaft (E) and the output shaft (S), the first power path (P1) having a first fixed speed ratio (G1) and comprising the first clutch (C1), and the second power path (P2) having a second fixed speed ratio (G2) greater than the first ratio (G1) and in the same direction and comprising the second clutch (C3), the first member (A) of the double planetary gearset (50) being connected to the first power path (P1) by the first clutch (C1), the second member (B) being fixed to the output shaft (S), the third member (C) being connected to the second power path (P2) by the second clutch (C3) and held against rotation by the first brake (B1), and the fourth member (D) being held against rotation by the second brake (B2) and connected to one of the two power paths by the third clutch (C4), so as to obtain by selective operation in pairs of the five control devices, six forward gears: a first, by the first clutch (C1) and the first brake (B1); a second by the first control clutch (C1) and the second brake (B2); a third by the first and third clutches (C1, C4); a fourth by the first and second clutches (C1, C3); a fifth in direct drive by the second and third clutches (C3, C4); a sixth by the second clutch (C3) and the second brake (B2); a braked neutral position by the first and second brakes (B1, B2); and a reverse drive by the third clutch (C4) and the first brake (B1), **characterized in that** the fourth member (D) is connected to the second power path (P2) by the third clutch (C4).

12. A transmission according to claim 11, **characterized in that** the input (E) and output (S) shafts being aligned, the first power path (P1) comprises a planetary gearset (10) with three members of which one is fixed to the casing, defining the first fixed speed ratio (G1) less than one, whereas the second power path (P2) is in direct drive defining the second fixed speed ratio (G2) equal to one.

13. A transmission according to claim 12, **characterized in that** the three-member planetary gearset (10) comprises a planet carrier (12) fixed to the input shaft (E) carrying planet pinions (13) and (13a) meshed with each other and respectively with a ring gear (14) and with a sun gear (11) fixed to the casing, the ring gear (14) forming the first power path of fixed ratio (G1) less than one comprising the first control clutch (C1) and the input shaft (E) and the planet carrier (12) forming the second power path (P2) in direct drive of fixed ratio (G2) equal to one comprising the second control clutch (C3) and the third control clutch (C4).

14. A transmission according to claims 11 to 13, **characterized in that** the double planetary gearset (50) comprises a three-member planetary gearset (20) having a planet carrier (22) carrying planet pinions (23) meshed with a sun gear (21) and with a ring gear (24), and additional planet pinions (23a) meshed with the planet pinions (23) and with an additional sun gear (21a), the first member (A) being constituted by the additional sun gear (21 a), the second member (B) being constituted by the ring gear (24), the third member (C) being constituted by the planet carrier (22), and the fourth member (D) being constituted by the sun gear (21).

15. A transmission according to claims 11 to 13, **characterized in that** the double planetary gearset (50) comprises a three-member planetary gearset (20) having a planet carrier (22) carrying planet pinions (23) meshed with a sun gear (21) and with a ring gear (24), and another three-member gearset (30) having a planet carrier (32) carrying planet pinions (33) and (33a) meshed with each other and respectively with a ring gear (34) and a sun gear (31), the first member (A) being constituted by the sun gear (31), the second member (B) being constituted by the ring gears (24) and (34) fixed together for rotation, the third member (C) being constituted by the planet carriers (22) and (32) fixed together for rotation, and the fourth member (D) being constituted by the sun gear (21).

16. A transmission according to claim 11, **characterized in that** the input (E) and output shafts (S) being parallel, the first power path (P1) and the second power path (P2) each comprise a parallel gearset (1), (2), with constant-mesh gearwheels, respectively defining the first fixed speed ratio (G1) and the second fixed speed ratio (G2) greater than the first ratio (G1) and in the same direction.

17. A transmission according to claim 16, **characterized in that** the double planetary gearset (50) comprises a three-member planetary gearset (20) having a planet carrier (22) carrying planet pinions (23) meshed with a sun gear (21) and with a ring gear (24) and another three-member gearset (40) having a planet carrier (42) carrying planet pinions (43) meshed with a sun gear (41) and with a ring gear (44), the first member (A) being constituted by the ring gear (44), the second member (B) being constituted by the ring gear (24) and the planet carrier (42) fixed together for rotation, the third member (C) being constituted by the planet carrier (22) and the fourth member (D) being constituted by sun gears (21) and (41) fixed together for rotation.

## Patentansprüche

1. Automatisches Mehrganggetriebe, insbesondere für Kraftfahrzeug, bestehend aus zwischen einer Antriebswelle (E) und einer Abtriebswelle (S), die in einem Gehäuse angeordnet sind, einem mit der Abtriebswelle (S) konzentrischen Planetensatz aus vier in Drehzahlordnung von einem ersten bis zu einem vierten mit (A, B, C, D) bezeichneten Elementen, der doppelter Planetensatz (50) genannt wird, zwei Leistungswegen (P1, P2) zwischen der Antriebswelle (E) und dem doppelten Planetensatz (50) sowie fünf Schaltelementen, nämlich drei Kupplungen (C1, C2, C3) und zwei Bremsen (B1, B2), deren selektives paarweises Eingreifen verschiedene Übersetzungsverhältnisse zwischen der Antriebswelle (E) und der Abtriebswelle (S) bewirkt, wobei der erste Leistungsweg (P1) ein erstes festes Übersetzungsverhältnis (G1) aufweist und die erste und die zweite Kupplung (C1, C2) enthält, und der zweite Leistungsweg (P2) ein zweites festes Übersetzungsverhältnis (G2), das höher als das erste Verhältnis (G1) ist, und die gleiche Drehrichtung aufweist und die dritte Kupplung (C3) enthält, wobei das erste Element (A) des doppelten Planetensatzes (50) mit dem ersten Leistungsweg (P1) durch die erste Kupplung (C1) verbunden ist, während das zweite Element (B) mit der Abtriebswelle (S) fest verbunden ist, das dritte Element (C) mit dem zweiten Leistungsweg (P2) durch die dritte Kupplung (C3) verbunden ist und durch die erste Bremse (B1) arretiert wird und das vierte Element (D) mit dem ersten Leistungsweg (P1) durch die zweite Kupplung (C2) verbunden ist und durch die zweite Bremse (B2) arretiert wird, wobei das Getriebe **dadurch gekennzeichnet ist, dass** es eine vierte Kupplung (C4) enthält, die das vierte Element (D) mit dem zweiten Leistungsweg (P2) verbindet und ein sechstes Schaltorgan bildet, derart, dass durch selektives paarweises Eingreifen der sechs Schaltelemente erhalten werden: acht Vorwärtsgänge, nämlich einen ersten durch die erste Kupplung (C1) und die erste Bremse (B1); einen zweiten durch die erste Kupplung (C1) und die zweite Bremse (B2); einen dritten durch die erste und die zweite Kupplung (C1, C2); einen vierten durch die erste und die vierte Kupplung (C1, C4); einen fünften durch die erste und die dritte Kupplung (C1, C3); einen sechsten direkten Gang durch die dritte und die vierte Kupplung (C3, C4); einen siebten durch die zweite und die dritte Kupplung (C2, C3); und einen achten durch die dritte Kupplung (C3) und die zweite Bremse (B2), eine gebremste Neutralstellung durch die erste und die zweite Bremse (B1, B2), ein erster Rückwärtsgang durch die zweite Kupplung (C2) und die erste Bremse (B1),und ein zweiter Rückwärtsgang durch die vierte Kupplung (C4) und die erste Bremse (B1).

2. Getriebe nach Anspruch 1, **dadurch gekennzeichnet, dass** bei aufeinander ausgerichteter Antriebswelle (E) und Abtriebswelle (S) der erste Leistungsweg (P1) einen Planetensatz (10) mit drei Elementen enthält, wovon eines mit dem Gehäuse fest verbunden ist, der das erste feste Übersetzungsverhältnis (G1) kleiner als Eins definiert, während der zweite Leistungsweg (P2) ein Direktgang ist, der das zweite feste Übersetzungsverhältnis (G2), das gleich Eins ist, definiert.

3. Getriebe nach Anspruch 2, **dadurch gekennzeichnet, dass** der Planetensatz (10) mit drei Elementen einen Planetenträger (12) umfasst, der mit der Antriebswelle (E) fest verbunden ist und die Planeten (13) und (13a), die miteinander und mit einem Ringrad (14) bzw. mit einem mit dem Gehäuse fest verbundenen Sonnenrad (11) in Eingriff sind, trägt, wobei das Ringrad (14) den ersten Leistungsweg mit festem Verhältnis (G1), das kleiner als Eins ist, bildet und die erste Kupplung (C1) und die zweite Kupplung (C2) enthält, und die Antriebswelle (E) und der Planetenträger (12) den zweiten Leistungsweg (P2) als Direktgang mit festem Verhältnis (G2), das gleich Eins ist, bildet und die dritte Kupplung (C3) und die vierte Kupplung (C4) enthält.

4. Getriebe nach den Ansprüchen 1 bis 3, **dadurch gekennzeichnet, dass** der doppelte Planetensatz (50) einen Planetensatz mit drei Elementen (20) umfasst, der einen Planetenträger (22) besitzt, der Planeten (23), die mit einem Sonnenrad (21) und mit einem Ringrad (24) in Eingriff sind, und zusätzliche Planeten (23a), die mit den Planeten (23) und mit einem zusätzlichen Sonnenrad (21a) in Eingriff sind, trägt, wobei das erste Element (A) aus dem zusätzlichen Sonnenrad (21a) gebildet ist, das zweite Element (B) aus dem Ringrad (24) gebildet ist, das dritte Element (C) aus dem Planetenträger (22) gebildet ist und das vierte Element (D) aus dem Sonnenrad (21) gebildet ist.

5. Getriebe nach den Ansprüchen 1 bis 3, **dadurch gekennzeichnet, dass** der doppelte Planetensatz (50) einen Planetensatz mit drei Elementen (20), der einen Planetenträger (22) besitzt, der Planeten (23), die mit einem Sonnenrad (21) und mit einem Ringrad (24) in Eingriff sind, trägt, und einen weiteren Satz mit drei Elementen (30), der einen Planetenträger (32) besitzt, der Planeten (33) und (33a) trägt, die miteinander und mit einem Ringrad (34) bzw. einem Sonnenrad (31) in Eingriff sind, umfasst, wobei das erste Element (A) durch das Sonnenrad (31) gebildet ist, das zweite Element (B) durch die Ringräder (24) und (34), die drehfest miteinander verbunden sind, gebildet ist, das dritte Element (C) durch die Planetenträger (22) und (32), die drehfest miteinander verbunden sind, gebildet ist und das vierte Element (D) durch das Sonnenrad (21) gebildet ist.

6. Getriebe nach einem der vorhergehenden Ansprüche, **dadurch gekennzeichnet, dass** es außerdem einen Freilauf (R1) umfasst, der parallel zu der ersten Bremse (B1) angeordnet ist.

7. Getriebe nach einem der vorhergehenden Ansprüche, **dadurch gekennzeichnet, dass** es mit einem hydraulischen Wandler versehen ist, der eine die Antriebswelle (E) bildende Abtriebswelle (66) besitzt.

8. Getriebe nach Anspruch 2, **dadurch gekennzeichnet, dass** der Planetensatz (10) mit drei Elementen einen Planetenträger (12) umfasst, der mit der Antriebswelle (E) fest verbunden ist und Planeten (13) und (13a) trägt, die miteinander und mit einem Ringrad (14) bzw. mit einem Sonnenrad (11), das mit einer Bremse (Bo) verbunden ist, um den ersten Leistungsweg (P1) zu steuern, in Eingriff sind, wobei das Ringrad (14) diesen ersten Leistungsweg (P1) mit festem Verhältnis (G1) kleiner als Eins bildet, der die erste Kupplung (C1) und die zweite Kupplung (C2) enthält, und die Antriebswelle (E) und der Planetenträger (12) den zweiten Leistungsweg (P2) als Direktgang mit festem Verhältnis (G2), das gleich Eins ist, bilden, der die dritte Kupplung (C3) und die vierte Kupplung (C4) enthält.

9. Getriebe nach Anspruch 1, **dadurch gekennzeichnet, dass** bei zueinander paralleler Antriebswelle (E) und Abtriebswelle (S) der erste Leistungsweg (P1) und der zweite Leistungsweg (P2) jeweils parallele Vorgelege (1), (2) mit stets in Eingriff befindlichen Ritzeln enthalten, die das erste feste Übersetzungsverhältnis (G1) bzw. das zweite feste Übersetzungsverhältnis (G2), das größer als (G1) ist und dieselbe Drehrichtung hat, definieren.

10. Getriebe nach Anspruch 9, **dadurch gekennzeichnet, dass** der doppelte Planetensatz (50) einen Planetensatz mit drei Elementen (20), der einen Planetenträger (22) besitzt, der Planeten (23) trägt, die mit einem Sonnenrad (21) und mit einem Ringrad (24) in Eingriff sind, und einen weiteren Satz mit drei Elementen (40), der einen Planetenträger (42) besitzt, der Planeten (43) trägt, die mit einem Sonnenrad (41) und einem Ringrad (44) in Eingriff sind, umfasst, wobei das erste Element (A) durch das Ringrad (44) gebildet ist, das zweite Element (B) durch das Ringrad (24) und den Planetenträger (42), die drehfest miteinander verbunden sind, gebildet ist, das dritte Element (C) durch den Planetenträger (22) gebildet ist und das vierte Element (D) durch die Sonnenräder (21) und (41), die drehfest miteinander verbunden sind, gebildet ist.

11. Automatisches Mehrganggetriebe, insbesondere für Kraftfahrzeug, bestehend aus zwischen einer Antriebswelle (E) und einer Abtriebswelle (S), die in einem Gehäuse angeordnet sind, einem mit der Abtriebswelle (S) konzentrischen Planetensatz aus vier in Drehzahlordnung von einem ersten bis zu einem vierten mit (A, B, C, D) bezeichneten Elementen, der doppelter Planetensatz (50) genannt wird, und zwei Leistungswegen (P1, P2) zwischen der Antriebswelle (E) und dem doppelten Planetensatz (50), sowie fünf Schaltelementen, nämlich drei Kupplungen (C1, C3, C4) und zwei Bremsen (B1, B2), deren selektives paarweises Eingreifen verschiedene Übersetzungsverhältnisse zwischen der Antriebswelle (E) und der Abtriebswelle (S) bestimmt, wobei der erste Leistungsweg (P1) ein erstes festes Übersetzungsverhältnis (G1) aufweist und die erste Kupplung (C1) enthält und der zweite Leistungsweg (P2) ein zweites festes Übersetzungsverhältnis (G2), das größer als das erste Verhältnis (G1) ist, und die gleiche Drehrichtung aufweist, aufweist und die zweite Kupplung (C3) enthält, wobei das erste Element (A) des doppelten Planetensatzes (50) mit dem ersten Leistungsweg (P1) durch die erste Kupplung (C1) verbunden ist, das zweite Element (B) mit der Abtriebswelle (S) fest verbunden ist, das dritte Element (C) mit dem zweiten Leistungsweg (P2) durch die zweite Kupplung (C3) verbunden ist und durch die erste Bremse (B1) arretiert wird und das vierte Element (D) durch die zweite Bremse (B2) arretiert wird und mit einem der zwei Leistungswege durch die dritte Kupplung (C4) verbunden ist, derart, dass durch selektives paarweises Eingreifen der fünf Schaltelemente erhalten werden: sechs Vorwärtsgänge, nämlich einen ersten durch die erste Kupplung (C1) und die erste Bremse (B1); einen zweiten durch die erste Kupplung (C1) und die zweite Bremse (B2); einen dritten durch die erste und die dritte Kupplung (C1, C4); einen vierten durch die erste und die zweite Kupplung (C1, C3); einen fünften als Direktgang durch die zweite und die dritte Kupplung (C3, C4); einen sechsten durch die zweite Kupplung (C3) und die zweite Bremse (B2), eine gebremste Neutralstellung durch die erste und die zweite Bremse (B1, B2) und ein Rückwärtsgang durch die dritte Kupplung (C4) und die erste Bremse (B1), **dadurch gekennzeichnet, dass** das vierte Element (D) mit dem zweiten Leistungsweg (P2) durch die dritte Kupplung (C4) verbunden ist.

12. Getriebe nach Anspruch 11, **dadurch gekennzeichnet, dass** bei aufeinander ausgerichteter Antriebswelle (E) und Abtriebswelle (S) der erste Leistungsweg (P1) einen Planetensatz (10) mit drei Elementen umfasst, wovon eines mit dem Gehäuse fest verbunden ist, der das erste feste Übersetzungsverhältnis (G1) kleiner als Eins definiert, während der zweite Leistungsweg (P2) ein Direktgang ist, der das zweite feste Übersetzungsverhältnis (G2), das gleich Eins ist, definiert.

13. Getriebe nach Anspruch 12, **dadurch gekennzeichnet, dass** der Planetensatz (10) mit drei Elementen einen Planetenträger (12) umfasst, der mit der Antriebswelle (E) fest verbunden ist und Planeten (13) und (13a) trägt, die miteinander und mit einem Ringrad (14) bzw. mit einem mit dem Gehäuse fest verbundenen Sonnenrad (11) in Eingriff sind, wobei das Ringrad (14) den ersten Leistungsweg mit festem Verhältnis (G1) kleiner als Eins bildet, der die erste Kupplung (C1) und die Antriebswelle (E) enthält, und der Planetenträger (12) den zweiten Leistungsweg (P2) als Direktgang mit festem Verhältnis (G2), das gleich Eins ist, bildet, der die zweite Kupplung (C3) und die dritte Kupplung (C4) enthält.

14. Getriebe nach den Ansprüchen 11 bis 13, **dadurch gekennzeichnet, dass** der doppelte Planetensatz (50) einen Planetensatz mit drei Elementen (20) umfasst, der einen Planetenträger (22) besitzt, der Planeten (23), die mit einem Sonnenrad (21) und mit einem Ringrad (24) in Eingriff sind, und weitere Planeten (23a), die mit den Planeten (23) und mit einem zusätzlichen Sonnenrad (21a) in Eingriff sind, trägt, wobei das erste Element (A) durch das zusätzliche Sonnenrad (21a) gebildet ist, das zweite Element (B) durch das Ringrad (24) gebildet ist, das dritte Element (C) durch den Planetenträger (22) gebildet ist und das vierte Element (D) durch das Sonnenrad (21) gebildet ist.

15. Getriebe nach den Ansprüchen 11 bis 13, **dadurch gekennzeichnet, dass** der doppelte Planetensatz (50) einen Planetensatz mit drei Elementen (20), der einen Planetenträger (22) besitzt, der Planeten (23) trägt, die mit einem Sonnenrad (21) und mit einem Ringrad (24) in Eingriff sind, und einen weiteren Satz mit drei Elementen (30), der einen Planetenträger (32) besitzt, der Planeten (33) und (33a) trägt, die miteinander und mit einem Ringrad (34) bzw. mit einem Sonnenrad (31) in Eingriff sind, umfasst, wobei das erste Element (A) durch das Sonnenrad (31) gebildet ist, das zweite Element (B) durch die Ringräder (24) und (34), die drehfest miteinander verbunden sind, gebildet ist, das dritte Element (C) durch die Planetenträger (22) und (32), die drehfest miteinander verbunden sind, gebildet ist und das vierte Element (D) durch das Sonnenrad (21) gebildet ist.

16. Getriebe nach Anspruch 11, **dadurch gekennzeichnet, dass** bei zueinander paralleler Antriebswelle (E) und Abtriebswelle (S) der erste Leistungsweg (P1) und der zweite Leistungsweg (P2) jeweils parallele Vorgelege (1), (2), deren Ritzel ständig in Eingriff sind, umfassen, die das erste feste Übersetzungsverhältnis (G1) bzw. das zweite feste Übersetzungsverhältnis (G2), das größer als (G1) ist und die gleiche Drehrichtung hat, definieren.

17. Getriebe nach Anspruch 16, **dadurch gekennzeichnet, dass** der doppelte Planetensatz (50) einen Planetensatz mit drei Elementen (20), der einen Planetenträger (22) besitzt, der Planeten (23) trägt, die mit einem Sonnenrad (21) und mit einem Ringrad (24) in Eingriff sind, und einen weiteren Satz mit drei Elementen (40), der einen Planetenträger (42) besitzt, der Planeten (43) trägt, die mit einem Sonnenrad (41) und mit einem Ringrad (44) in Eingriff sind, umfasst, wobei das erste Element (A) durch das Ringrad (44) gebildet ist, das zweite Element (B) durch das Ringrad (24) und den Planetenträger (42), die drehfest miteinander verbunden sind, gebildet ist, das dritte Element (C) durch den Planetenträger (22) gebildet ist und das vierte Element (D) durch die Sonnenräder (21) und (41), die drehfest miteinander verbunden sind, gebildet ist.
